# EUROPÄISCHE PATENTANMELDUNG

(11) **EP 2 562 509 A2**
(43) Veröffentlichungstag der Anmeldung: **27.02.2013**
(21) Anmeldenummer: 12005678.3
(22) Anmeldetag: 03.08.2012
(51) Int. Cl.: F41C 33/06, B60R 7/14

(54) **Waffenbox**

(30) Priorität: 22.08.2011 DE 102011111254
(71) Anmelder: KAMEI automotive GmbH, 38448 Wolfsburg (DE)
(72) Erfinder: Schulze, Dirk, DE - 29378 Wittingen (DE)
(74) Vertreter: Friedrich, Andreas

(57) **Zusammenfassung**

Die Erfindung betrifft eine Waffenbox (1) mit einem in einem Kraftfahrzeug befestigbaren Korpus (2), der eine Unterseite (4) aufweist, einem an dem Korpus (2) schwenkbar befestigten abschließbaren Deckel (8) sowie wenigstens einem Lagerelement mit einer Anlagefläche zur Lagerung einer Waffe, das im Korpus (2) angeordnet ist, wobei die Waffenbox (1) eingerichtet ist, in einem Fußraum vor einer Rückbank des Kraftfahrzeugs angebracht zu werden, und an der Unterseite (4) eine Ausnehmung (6) für einen Mitteltunnel des Kraftfahrzeugs aufweist.

## Beschreibung

Die Erfindung betrifft eine Waffenbox mit einem in einem Kraftfahrzeug befestigbaren Korpus, der eine Unterseite aufweist, einem an dem Korpus schwenkbar befestigten abschließbaren Deckel sowie wenigstens einem Lagerelement mit einer Anlagefläche zur Lagerung einer Waffe.

Eine derartige Waffenbox ist beispielsweise aus der DE 20 2009 017 792 U1 bekannt. Derartige Waffenboxen werden beispielsweise in Einsatzfahrzeugen mitgeführt, um die von den Einsatzkräften benötigten Waffen sicher und dennoch leicht zugänglich zu verwahren. So kann ein dort beschriebener Waffenkasten beispielsweise an der Beifahrertür des Fahrzeuges oder an einer Seitenwandung des Kofferraums angeordnet sein. Dadurch ist die maximale Größe der Waffenbox und damit die maximale Größe der zu verstauenden Waffe jedoch durch die Bauart des Kraftfahrzeugs begrenzt. Da in Einsatzfahrzeugen in der Regel Pistolen oder Maschinenpistolen mitgeführt werden, stellt dies auf diesem Gebiet kein Problem dar.

Sollen jedoch größere, insbesondere längere Waffen, beispielsweise Gewehre transportiert werden, ist ein derartiger Waffenkasten ungeeignet. Eine derartige Waffe kann nicht in der Seitenwand einer Beifahrertür verstaut werden, da die Längsausdehnung der Waffe deutlich größer ist als die Länge der Tür.

Aus der DE 197 23 326 A1 ist eine Halterung für ein Gewehr, eine Pistole oder einen Revolver bekannt, die ebenfalls im Fahrzeug angebracht werden kann. Diese Halterung ist dabei im Kofferraum fixiert und besteht aus einer Grundplatte und einer Verschlussplatte. Beide sind über abschließbare Bolzen miteinander verbindbar. Die Verschlussplatte deckt dabei die sicherheitsrelevanten Teile des Gewehres, insbesondere Abzug und Munitionskammer, ab. Ein unbefugter Zugriff ist auf diese Weise nicht möglich. Um die baulichen Abmessungen gering zu halten, wird jedoch das Gewehr nicht vollständig umgeben, so dass auf der einen Seite der Schaft und auf der anderen Seite der Lauf aus der Halterung herausragen.

Nachteilig ist zum einen, dass das Gewehr nicht vollständig von der Befestigung umgeben wird. Insbesondere dadurch, dass diese im Kofferraum angeordnet wird, in dem üblicherweise noch andere Gegenstände transportiert werden, kann es hier zu Beschädigungen der teilweise empfindlichen Gewehrbauteile, beispielsweise des Laufs, kommen. Zum anderen ist die komplizierte Handhabung nachteilig. Das Gewehr muss erst auf die Grundplatte aufgelegt werden, bevor anschließend die Abdeckplatte über Bolzen, die abschließbar sind, mit der Grundplatte verbunden wird, so dass das Gewehr zwischen Grund- und Abdeckplatte eingeschlossen ist.

Zudem muss das Gewehr, bevor es in die Halterung eingelegt werden kann, von eventuellen Aufbauten befreit werden. Diese werden insbesondere bei der Jagd, aber auch bei verschiedenen Sportdisziplinen verwendet, um beispielsweise dem Schützen das Zielen auf große Entfernung zu erleichtern. Beispielhaft seien hier Zielfernrohre, Visierlinienerhöhungen oder spezielle Filter genannt. Insbesondere bei der Jagd ist es oft unpraktisch, das Gewehr vor dem Verstauen im Kraftfahrzeug wieder zu zerlegen. Dies gilt insbesondere dann, wenn beispielsweise das Wetter schlecht ist oder, wie bei Jagdgesellschaften oft üblich, noch ein geselliges Beisammensein der eigentlichen Jagd folgen soll.

Aus der US 3,473,673 A ist eine Befestigung für ein Gewehr bekannt, bei das Gewehr offen in zwei U-förmigen Klammern im hinteren Bereich des Kraftfahrzeugs gehalten wird. Nachteilig ist jedoch, dass das Gewehr frei zugänglich und nicht gesichert ist.

Die US 3,635,381 A offenbart eine Halterung für ein Gewehr, die im vorderen Bereich vor den Frontsitzen des Kraftfahrzeugs angeordnet wird. Diese Anordnung soll insbesondere für Polizei- und Einsatzfahrzeuge einen schnellen Zugriff auf das Gewehr gewährleisten, ohne dass es von Personen, die beispielsweise im hinteren Bereich des Kraftfahrzeugs sitzen und gegebenenfalls unter Arrest stehen, ergriffen und verwendet werden kann.

Der Erfindung liegt folglich die Aufgabe zugrunde, eine gattungsgemäße Waffenbox so weiterzuentwickeln, dass auch lange Waffen, beispielsweise Luft-, Sport- oder Jagdgewehre inklusive Aufbau schnell, sicher und dennoch leicht zugänglich verstaubar sind.

Die Erfindung löst die gestellte Aufgabe durch eine gattungsgemäße Waffenbox, die sich dadurch auszeichnet, dass die Waffenbox eingerichtet ist, in einem Fußraum vor einer Rückbank des Kraftfahrzeugs angebracht zu werden und an der Unterseite eine Ausnehmung für einen Mitteltunnel des Kraftfahrzeugs aufweist. Die Waffenbox ist also an die spezielle Form des Fußraums das jeweiligen Kraftfahrzeugs, in dem die Waffenbox verwendet werden soll, angepasst. Dadurch hat die Waffenbox eine optimale Passform, um so insbesondere durch die Ausnehmung für den Mitteltunnel in zumindest einer Richtung senkrecht zur Fahrtrichtung des Kraftfahrzeugs verrutschsicher transportiert zu werden.

Damit ist die Waffe in der Fahrgastzelle des Kraftfahrzeuges untergebracht, so dass der im Kofferraum zur Verfügung stehende Stauraum nicht beeinträchtigt wird. Je nach Ausgestaltung der Waffenbox und des Kraftfahrzeuges kann die Waffenbox auch so ausgestaltet sein, dass in einem hochgeklappten Zustand der Rückbank der Deckel der Waffenbox eine Ablagefläche bildet, auf der weitere Dinge transportiert werden können. Insbesondere kann so eine verbreiterte Liegefläche, beispielsweise für einen Jagdhund, geschaffen werden.

Dadurch können auch lange Waffen sicher und schnell verstaut werden und sind dennoch leicht zugänglich, ohne dass Stauraum im Kofferraum verloren geht.

Vorzugsweise ist das wenigstens eine Lagerelement derart verschieblich angeordnet, dass ein Anlagewinkel, den die Anlagefläche mit der Unterseite des Korpus einschließt, einstellbar ist.

Dadurch ist gewährleistet, dass beispielsweise auch ein Jagdgewehr mit einem hohen Zielfernrohr als Aufbau sicher in der Box verstaubar ist. Selbst wenn die Gesamthöhe der Waffe mit allen Aufbauten größer ist als die Höhe des Korpus, kann der Anlagewinkel so gewählt werden, dass die Waffe nicht senkrecht, sondern gekippt an der Anlagefläche anliegt. Somit wird die effektive Höhe der Waffe reduziert und sie kann in der Waffenbox Platz finden. Ein Demontieren der Aufbauten vor dem Verstauen des Gewehrs ist so überflüssig. Damit kann das Gewehr schnell und einfach in der Waffenbox untergebracht werden. Dadurch, dass der Deckel abschließbar ist, ist das Gewehr auch vor fremden Zugriff geschützt und kann sicher transportiert werden.

Vorteilhafterweise ist der Anlagewinkel stufenlos einstellbar. Dies kann beispielsweise über einen oder mehrere Stellmotoren geschehen. Damit ist die Position des Lagerelements bzw. der Lagerfläche des Lagerelementes nicht mehr auf einige wenige Einstellungen beschränkt, sondern kann für jede Höhe der zu verstauenden Waffe individuell und speziell eingestellt werden. Als vorteilhaft hat sich dabei herausgestellt, wenn der Anlagewinkel zwischen 10 Grad, bevorzugt 20 Grad, besonders bevorzugt 30 Grad und 70 Grad, bevorzugt 80 Grad, besonders bevorzugt 90 Grad einstellbar ist. Mit diesem Winkelbereich werden je nach Höhe des Korpus die gängigen Waffenhöhen abgedeckt.

Dabei ist natürlich von Vorteil, wenn der Anlagewinkel nicht nur einstellbar ist, sondern das Lagerelement in der jeweiligen Position feststellbar ist. Erst dadurch kann eine sichere Lagerung der teilweise empfindlichen Waffen in der gewählten Position des Lagerelementes und damit bei einem eingestellten Anlagewinkel gewährleistet werden. Die Feststellung des Lagerelementes kann beispielsweise über Stellschrauben oder Rasteinheiten geschehen. Natürlich sind auch andere Möglichkeiten, wie beispielsweise Klemmelemente, denkbar.

In einer bevorzugten Ausführungsform der Erfindung besteht der Deckel aus wenigstens zwei Teilen, die alle schwenkbar und gegebenenfalls separat abschließbar am Korpus befestigt sind. Bevorzugt erstreckt sich der Deckel nicht über die gesamte Länge der Waffenbox. Der verbleibende Teil ist insbesondere fest montiert und lässt sich nicht öffnen. Dieser Teil ist insbesondere der Teil, an dem der Lauf bzw. die Mündung der zu verstauenden Waffe gelagert wird. Damit wird zum einen sichergestellt, dass die Waffe immer in der gleichen Richtung in der Waffenbox verstaut wird und zum anderen wird gewährleistet, dass der vordere Teil des Laufs vor Beschädigungen und versehentlich Stößen im geöffneten Zustand der Waffenbox geschützt ist. Zudem ist beim Einlegen der Waffe in die Waffenbox der Lauf immer von der einlegenden Person weggerichtet. Sollte sich noch ein Projektil im Lauf oder in der Munitionskammer befinden, könnte dieses, falls sich der Schuss löst, den Einladenden nicht verletzen. Damit wird die Sicherheit weiter erhöht.

Vorzugsweise ist die Waffenbox ausgebildet, um an im Kraftfahrzeug vorgesehenen Befestigungseinrichtungen befestigt zu werden. In den meisten Fahrzeugen, die über eine umklappbare Rückbank verfügen, wird diese Rückbank an dafür vorgesehene Befestigungseinrichtungen arretiert. Wird die Rückbank umgeklappt, liegen diese frei. Diese können somit genutzt werden, um die Waffenbox an ihnen zu befestigen. Hier ist zumeist eine auf den jeweiligen Fahrzeugtyp angepasste Ausgestaltung der Waffenbox nötig. Dadurch, dass die Waffenbox dann beispielsweise im Fußraum vor der Rückbank am Kraftfahrzeug befestigt ist, wird die Sicherheit im Kraftfahrzeuginnenraum weiter erhöht. Insbesondere bei Unfällen, beispielsweise mit Überschlag, wird auf diese Weise wirksam verhindert, dass die Waffenbox durch den Fahrgastinnenraum geschleudert wird und zu einem Verletzungsrisiko für die Insassen des Kraftfahrzeuges wird. Die Waffenbox verbleibt an ihrem Platz und auch das in ihr transportierte Gewehr kann nicht mehr durch den Innenraum geschleudert werden.

Oftmals sind auch bei nicht umgeklappter Rückbank, insbesondere im unteren Teil Befestigungseinrichtungen, beispielsweise in Form von Ösen vorgesehen, an denen die Waffenbox befestigt werden kann. Insbesondere wenn die Waffenbox ausgebildet ist, um beispielsweise nur ein Gewehr aufzunehmen, ist sie dadurch so schmal, dass trotz der eingesetzten Waffenbox noch Mitfahrer auf der Rückbank Platz nehmen können. Die Waffenbox liegt dann vorteilhafterweise so an der Rückbank an, dass sie sich zwischen den Unterschenkeln der auf der Rückbank sitzenden Passagiere und der Rückbank befindet.

Vorzugsweise ist der Korpus an der Innenseite beispielsweise mit einem Kunststoff gepolstert. Damit ist es möglich, die Waffe möglichst schonend zu lagern. Zudem wird erreicht, dass die Waffe während der Fahrt ihre Lage nicht ändert. Damit kommt es nicht zu einem Klappern oder einer sonstigen störenden Geräuschentwicklung und zudem wird die Waffe vor Beschädigungen geschützt. Insbesondere die auf die Waffe montierte Optik, beispielsweise Zielfernrohr oder Kimme und Korn, wird auf diese Weise vor Beschädigungen geschützt.

An der Unterseite des Korpus der Waffenbox befindet sich vorteilhafterweise eine Ausnehmung für den Mitteltunnel des Kraftfahrzeugs. Damit wird erstens gewährleistet, dass der im Fußraum vor der Rückbank des Kraftfahrzeugs zur Verfügung stehende Stauraum optimal ausgenutzt wird und zum anderen wird verhindert, dass die Waffenbox sich im Fahrzeug unkontrolliert bewegen kann. Dies gilt selbst für den Fall, dass sie nicht durch zusätzliche Befestigungsmittel am Kraftfahrzeug arretiert ist. Dadurch, dass die Ausnehmung auf dem Mitteltunnel aufsitzt, wird eine Verschiebung der Waffenbox relativ zum Mitteltunnel nach rechts oder links verhindert.

Um mehrere Waffen in der Waffenbox transportieren zu können, können vorteilhafterweise auch mehrere Lagerelemente vorgesehen sein. Jedes dieser Lagerelemente weist dann eine Lagerfläche auf, an der eine Waffe angelegt werden kann. Vorteilhafterweise ist dann jedes der Lagerelemente individuell verschieblich angeordnet, so dass für verschiedene Lagerelemente die Lagerflächen unterschiedliche Anlagewinkel mit der Unterseite der Waffenbox bilden können. Auf diese Weise können auch unterschiedlich hohe Waffen einfach transportiert werden und die jeweiligen Anlagewinkel für jede Waffe individuell und optimal eingestellt werden.

In einer bevorzugten Ausführungsform ist im Korpus wenigstens eine Aufnahmevorrichtung für Munition und/oder Zubehör vorgesehen. Insbesondere, wenn die Waffenbox im Fußraum vor der Rückbank eines Kraftfahrzeugs angeordnet ist, wird so der in dem Fußraum zur Verfügung stehende Raum optimal ausgenutzt. Neben Munition und Zubehör für die Waffe können auch sonstige Gegenstände in der Waffenbox mit gelagert werden. Beispielhaft sei hier ein Fernglas, ein Messer oder sonstiges Werkzeug genannt, das insbesondere Jäger während der Jagd verwenden.

Vorzugsweise ist die Waffenbox an einer oberen Längskante abgeschrägt. Wird eine derartige Waffenbox in den Fußraum vor der Rückbank eines Kraftfahrzeugs angeordnet, ist auf diese Weise gewährleistet, dass noch immer ein ausreichender Fußraum verbleibt, um auch Passagiere auf der Rückbank sitzend transportieren zu können. Dabei kann entweder nur die obere Kante der Waffenbox abgeschrägt, angefast, abgerundet oder in sonstiger Weise gestaltet sein oder die ganze Seite der Waffenbox schräg verlaufen, so dass die Grundfläche, also die Fläche der Unterseite des Korpus der Waffenbox, größer ist als die Fläche des Deckels.

Wird nur ein Teil des Deckels verschwenkbar ausgebildet, kann es von Vorteil sein, dass der verschwenkbare Teil ein Drittel, die Hälfte oder zwei Drittel der Breite der Waffenbox ausmacht. Dies kann insbesondere auf den Fahrzeugtyp angepasst werden, und sich danach richten, in welchen Anteilen die Rückbank geteilt ist. Ist die Rückbank eines Kraftfahrzeuges so ausgebildet, dass beispielsweise ein Drittel der Rückbank separat umklappbar ist, kann es sinnvoll sein, auch nur ein Drittel des Deckels verschwenkbar ausgebildet vorzusehen. Natürlich sind auch alle anderen Teilungsverhältnisse möglich.

Vorteilhafterweise besteht der Korpus und der Deckel der Waffenbox aus einem Kunststoff, der insbesondere von der Kraftfahrzeugindustrie zertifiziert und abgenommen ist. Damit können Crash- und Rollover-Tests bestanden werden, so dass Sicherheitsnormen erfüllt werden können.

Sollen mit einem Kraftfahrzeug keine Waffen mehr transportiert werden, kann die Waffenbox einfach aus dem Fahrzeug entnommen werden und beispielsweise im Keller oder in der Garage zwischengelagert werden. Alternativ ist es auch möglich, aus dem Fußraum des Kraftfahrzeugs die Waffenbox zu entfernen und sie mitsamt darin enthaltenem Gewehr in den Kofferraum zu verfrachten. Damit wird die Beinfreiheit der Insassen des Kraftfahrzeugs auf der Rückbank wieder erhöht und somit der Sitzkomfort gesteigert. Die hier beschriebene Waffenbox ist folglich flexibel und vielseitig einsetzbar, so dass der tatsächliche Einsatzort der Waffenbox von den jeweiligen speziellen Gegebenheiten, beispielsweise Anzahl der mitfahrenden Personen bzw. der Menge des Gepäcks im Kofferraum abhängig gemacht werden kann. In einer bevorzugten Ausführungsform ist das Schloss, mit dem der Deckel der Waffenbox abschließbar ist, so ausgebildet, dass es durch die Schwenkbewegung des Deckels nicht zu Behinderungen oder Verhakungen des Schließzylinders in der Schließöffnung kommt. Ein derartiges Schloss ist beispielsweise in der Anmeldung DE 10 2010 011 775 A1 offenbart.

Mit Hilfe einer Zeichnung wird nachfolgend ein Ausführungsbeispiel der vorliegenden Erfindung näher erläutert. Es zeigt
- Figur 1 -: die schematische 3D-Ansicht einer Waffenbox gemäß einem ersten Ausführungsbeispiel der vorliegenden Erfindung,
- Figur 2 -: die Waffenbox aus Figur 1 mit einem teilweisen geöffneten Deckel und
- Figur 3 -: die Waffenbox aus den Figuren 1 und 2, bei der der Deckel vollständig geöffnet ist.

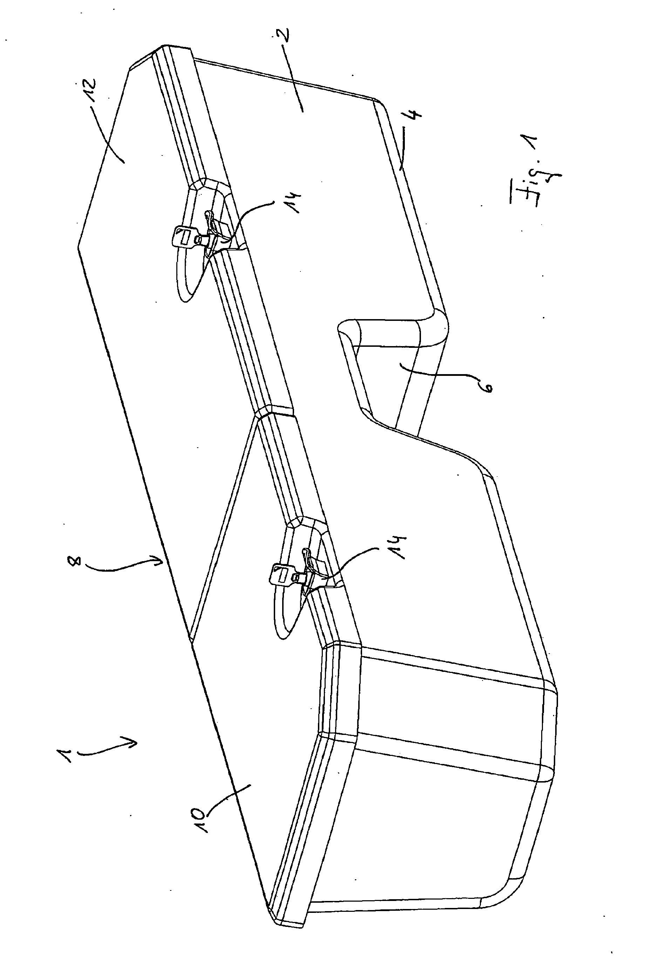

Figur 1 zeigt eine schematische 3D-Ansicht einer Waffenbox 1 gemäß einem ersten Ausführungsbeispiel der vorliegenden Erfindung. Die Waffenbox 1 umfasst einen Korpus 2, der eine Unterseite 4 aufweist. Im mittleren Bereich der Unterseite 4 ist eine Ausnehmung 6 vorgesehen, die an das jeweilige Fahrzeug angepasst ist und dafür vorgesehen ist, den Mitteltunnel des Kraftfahrzeuges aufzunehmen. Dadurch, dass die Unterseite 4 mit der Ausnehmung 6 individuell an das jeweilige Fahrzeug, in dem die Waffenbox 1 verwendet werden soll, und die in diesem vorgesehene Form des Mitteltunnels angepasst ist, wird allein durch diese Anpassung bereits ein Verschieben der Waffenbox 1 in einer Richtung senkrecht zur Fahrtrichtung des Kraftfahrzeugs verhindert. Bereits durch diese einfache Ausgestaltung wird die Waffe folglich sicher im Kraftfahrzeug gelagert.

Die in Figur 1 gezeigte Waffenbox 1 verfügt über einen Deckel 8, der aus einem ersten Deckelteil 10 und einem zweiten Deckelteil 12 besteht. Jedes der Deckelteile 10, 12 ist über ein separates Schließsystem 14 abschließbar und zudem schwenkbar am Korpus 2 der Waffenbox 1 befestigt.

In der in Figur 1 gezeigten Ausgestaltung einer Waffenbox 1 ist das erste Deckelteil 10 und das zweite Deckelteil 12 unterschiedlich groß ausgebildet. In dieser Ausgestaltung kann beispielsweise ein Jagdgewehr so in die Waffenbox 1 eingelegt werden, dass der Schaft unterhalb des zweiten Deckelteils 12 zu liegen kommt, während der Lauf und insbesondere die Mündung unterhalb des ersten Deckelteils 10 angeordnet ist. Insbesondere im Bereich der Mündung kann der Korpus 2 der Waffenbox verstärkt sein. Gleiches gilt für die Seite des Korpus 2, die zur Befestigung an dem Kraftfahrzeug, insbesondere an einer Rückbank des Kraftfahrzeuges vorgesehen ist. Auf diese Weise wird eine besonders sichere Befestigung der Waffenbox 1 am Kraftfahrzeug gewährleistet.

Soll nun beispielsweise die Waffe in der genannten Ausrichtung aus der Waffenbox 1 entnommen werden, muss lediglich das zweite Deckelteil 12 geöffnet werden. Dadurch ist es möglich, die Waffe aus der Waffenbox 1 zu entnehmen.

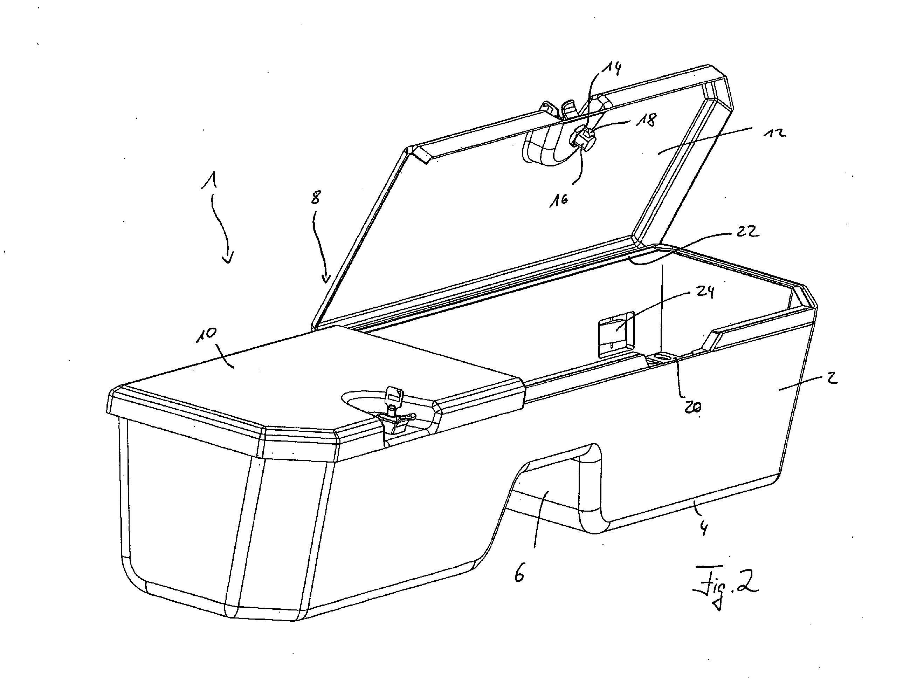

Figur 2 zeigt die Waffenbox 1 aus Figur 1, bei der das zweite Deckelteil 12 geöffnet ist. In diesem Zustand ist es möglich, eine Waffe in die Waffenbox 1 hineinzulegen bzw. aus ihr herauszunehmen. Dennoch ist insbesondere der empfindliche Lauf und die Mündung durch das weiterhin geschlossene erste Deckelteil 10 geschützt, solange sich die Waffe in der Waffenbox 1 befindet.

Das Schließsystem 14, mit dem das erste Deckelteil 10 und das zweite Deckelteil 12 abgeschlossen werden können, verfügt über einen Schließzylinder 16, an dem sich eine Schließlippe 18 befindet, die hinter ein im Randbereich des Korpus 2 vorgesehenes Schließblech 20 schnappt, wenn das zweite Deckelteil 12 geschlossen wird.

Im oberen Randbereich des Korpus 2 ist ein umlaufender Metallrahmen 22 angeordnet. Dadurch wird die Stabilität der gesamten Waffenbox 1 und insbesondere des Korpus 2 deutlich erhöht.

Im Innenraum der Waffenbox 1 ist in Figur 2 ein Befestigungskeil 24 zu erkennen, über den die Waffenbox 1 an beispielsweise im Fußraum eines Kraftfahrzeugs vorgesehenen Befestigungselementen befestigbar ist.

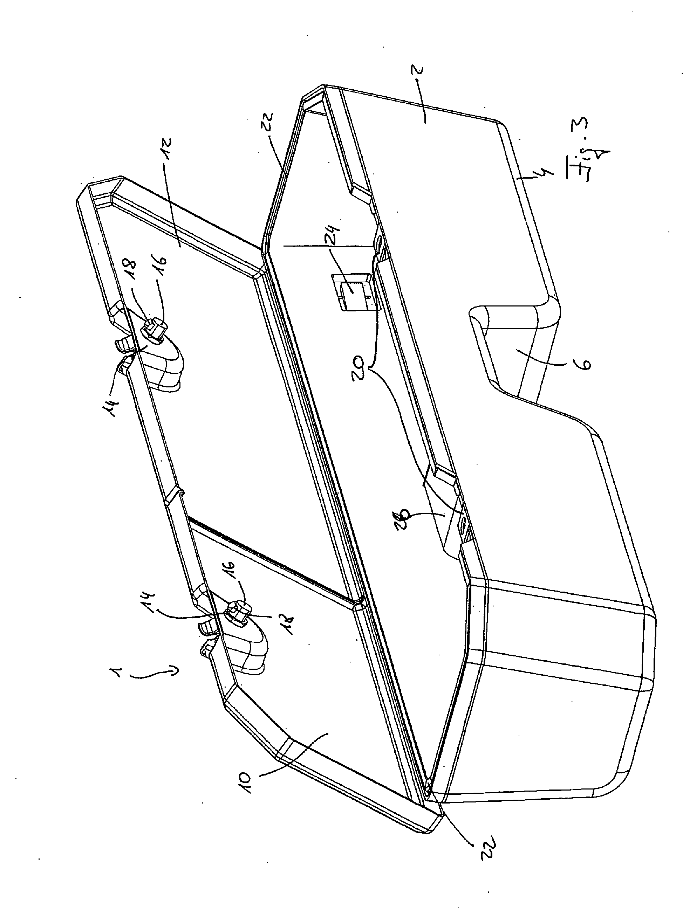

Figur 3 zeigt die Waffenbox 1 aus den Figuren 1 und 2, bei der beide Deckelteile 10, 12 geöffnet sind. Man erkennt, dass die in der Unterseite 4 vorgesehene Ausnehmung 6 natürlich auch im Innenraum der Waffenbox 1 vorliegt. Hier kann sie insbesondere als Auflagefläche 26 verwendet werden, um die sichere Lagerung von in der Waffenbox 1 zu verstauenden Waffen zu gewährleisten.

Innerhalb der Waffenbox 1 kann zudem wenigstens ein Lagerelement mit einer Anlagefläche vorgesehen sein, das derart verschieblich angeordnet ist, dass ein Anlagewinkel, den die Anlagefläche mit der Unterseite des Korpus einschließt, einstellbar ist. Auf diese Weise können insbesondere unterschiedlich hohe Waffen in der Waffenbox 1 sicher und einfach verstaut werden.

### Bezugszeichenliste

- 1: Waffenbox
- 2: Korpus
- 4: Unterseite
- 6: Ausnehmung
- 8: Deckel
- 10: Erstes Deckelteil
- 12: Zweites Deckelteil
- 14: Schließsystem
- 16: Schließzylinder
- 18: Schließlippe
- 20: Schließblech
- 22: Metallrahmen
- 24: Befestigungskeil
- 26: Auflagefläche

## Patentansprüche

1. Waffenbox (1) mit einem in einem Kraftfahrzeug befestigbaren Korpus (2), der eine Unterseite (4) aufweist, einem an dem Korpus (2) schwenkbar befestigten abschließbaren Deckel (8) sowie wenigstens einem Lagerelement mit einer Anlagefläche zur Lagerung einer Waffe, das im Korpus (2) angeordnet ist, **dadurch gekennzeichnet, dass** die Waffenbox (1) eingerichtet ist, in einem Fußraum vor einer Rückbank des Kraftfahrzeugs angebracht zu werden, und an der Unterseite (4) eine Ausnehmung (6) für einen Mitteltunnel des Kraftfahrzeugs aufweist.

2. Waffenbox (1) nach Anspruch 1, **dadurch gekennzeichnet, dass** das wenigstens eine Lagerelement derart verschieblich angeordnet ist, dass ein Anlagewinkel, den die Anlagefläche mit der Unterseite (4) des Korpus (2) einschließt, einstellbar ist.

3. Waffenbox (1) nach Anspruch 2, **dadurch gekennzeichnet, dass** der Anlagewinkel stufenlos einstellbar ist.

4. Waffenbox (1) nach Anspruch 2 oder 3, **dadurch gekennzeichnet, dass** der Anlagewinkel zwischen 10 Grad, bevorzugt 20 Grad, besonders bevorzugt 30 Grad und 70 Grad, bevorzugt 80 Grad, besonders bevorzugt 90 Grad einstellbar ist.

5. Waffenbox (1) nach einem der vorstehenden Ansprüche, **dadurch gekennzeichnet, dass** der Deckel (8) aus wenigstens zwei Teilen (10,12) besteht.

6. Waffenbox (1) nach einem der vorstehenden Ansprüche, **dadurch gekennzeichnet, dass** die Waffenbox (1) ausgebildet ist, um an im Kraftfahrzeug vorgesehenen Befestigungseinrichtungen befestigt zu werden.

7. Waffenbox (1) nach einem der vorstehenden Ansprüche, **dadurch gekennzeichnet, dass** der Korpus (2) an der Innenseite beispielsweise mit einem Kunststoff gepolstert ist.

8. Waffenbox (1) nach einem der vorstehenden Ansprüche, **dadurch gekennzeichnet, dass** mehrere Lagerelemente zur Lagerung jeweils einer Waffe vorgesehen sind.

9. Waffenbox (1) nach einem der vorstehenden Ansprüche, **dadurch gekennzeichnet, dass** im Korpus (2) wenigstens eine Aufnahmevorrichtung für Munition und/oder Zubehör vorgesehen ist.

10. Waffenbox (1) nach einem der vorstehenden Ansprüche, **dadurch gekennzeichnet, dass** die Waffenbox (1) an einer oberen Längskante abgeschrägt ist.
